# EUROPÄISCHE PATENTSCHRIFT

(11) **EP 0 801 805 B1**
(45) Veröffentlichungstag und Bekanntmachung des Hinweises auf die Patenterteilung: **03.11.1999**
(21) Anmeldenummer: 95910405.0
(22) Anmeldetag: 22.02.1995
(51) Int. Cl.: H01J 1/30, H01J 9/02

(54) **FELDEMISSIONSKATHODENEINRICHTUNG UND VERFAHREN ZUR HERSTELLUNG**
FIELD-EMISSION CATHODE AND METHOD OF MANUFACTURING IT
CATHODE A EMISSION PAR EFFET DE CHAMP ET SON PROCEDE DE FABRICATION

(30) Priorität: 23.02.1994 DE 4405768
(43) Veröffentlichungstag der Anmeldung: 22.10.1997
(73) Patentinhaber: Keesmann, Till, D-69115 Heidelberg (DE)
(72) Erfinder: KEESMANN, Till, D-69115 Heidelberg (DE); GROSSE-WILDE, Hubert, D-91077 Neunkirchen a.Br. (DE)
(74) Vertreter: Clemens, Gerhard, Dr.-Ing.
(86) Internationale Anmeldenummer: DE9500221
(87) Internationale Veröffentlichungsnummer: WO9523424

(56) Entgegenhaltungen:
- US-A- 5 089 742
- US-A- 5 138 220
- IBM TDB, Bd. 35, Nr. 7, Dezember 1992 Seiten 410--411, 'atomic force microscope with high dynamic range using bunny or dopy balls'
- PHYSICAL REVIEW B, Bd. 47, Nr. 12, 15.März 1993 Seiten 7546-7553, M.E.LIN ET AL. 'electron emission from an individual,supported c60 molecule'
- APPLIED PHYSICS LETTERS , Bd. 60, Nr. 13, 30.März 1992 Seiten 1556-1558, D.A.KIRKPATRICK ET AL. 'demonstration of vacuum field emission from a self-assembling biomolecular microstructure composite'
- NATURE, Bd. 361, 28.Januar 1993 Seiten 333-334, P.M.AJAYAN ET AL. 'capillarity-induced filling of carbon nanotubes' in der Anmeldung erwähnt

## Beschreibung

Die Erfindung betrifft eine Feldemissionskathodeneinrichtung mit einer Feldemissionskathode aus einem elektrisch leitfähigen Material und mit einer schlanken stabförmigen Geometrie oder einer Schneidkante zur Erzielung einer hohen Überhöhung der elektrischen Feldstärke, wobei der elektronenemittierende Teil der Feldemissionskathode röhrenförmige Moleküle aufweist, und Verfahren zu ihrer Herstellung.

Mit Feldemission wird der Austritt von Elektronen aus der Oberfläche eines elektrischen Leiters unter der Wirkung eines elektrischen Feldes von mehr als 10⁹ V/m bezeichnet. In der Praxis werden derartige Feldstärken an scharfen Kanten oder Spitzen, an denen Feldstärkeüberhöhungen auftreten, realisiert, wobei Hochvakuum zur Vermeidung von Gasentladungen erforderlich ist.

### STAND DER TECHNIK

Technisch werden Feldemissionskathoden eingesetzt, beispielsweise beim Feldelektronenmikroskop, bei Elektronenbeschleunigern, bei Höchstleistungsschaltern (OS DE 39 24 745 A1) und in Feldemissionsdioden und Feldemitterarrays für die Vakuummikroelektronik (so zum Beispiel Busta, Vacuum microelectronics-1992, Journal of Micromechanics and Microengineering, 2 (1992), S. 53-60 und Iannazzo, A Survey of the present status of vacuum microelectronics, Solid State Electronics, 36(1993), S. 301 bis 320). Als Feldemissionskathode kann ein Wolframdraht verwendet werden, dessen Spitze durch Ätzen so fein wird, daß sie im Lichtmikroskop nicht mehr zu sehen ist. Ebenfalls durch Ätzen können Kohlefasern an den Enden hinreichend fein hergestellt werden (Heinrich, Essig, Geiger, Appl. Phys. (1977) 12 S. 197 - 202), um als Feldemissionskathode zu dienen.

In der Vakuummikroelektronik werden die Feldemissionskathoden im allgemeinen mit den Verfahren der Mikroprozeßtechnik durch Ätzen und Aufdampfen unter Verwendung lithographisch hergestellter Masken erzeugt (s. Busta, Vacuum microelectronics-1992, Journal of Micromechanics and Microengineering, 2(1992), S.53-60). Hierdurch lassen sich kegelförmige Spitzen mit einem Krümmungsradius von wenigen nm oder keilförmige Schneidkanten mit vergleichbarem Krümmungsradius herstellen. Als Material für die Kathode wird beispielsweise Molybdän, Lanthanhexaborid, Hafnium, diamantahnlicher Kohlenstoff verwendet (B.C. Djubua, N.N. Chubun, Emission properties of Spindt-Type Cold Cathodes with Different Emission Cone Material, IEEE Transactions on Electron Devices, 38 (1991) No. 10, S. 2314-2316).

Nachteilig ist bei der Verwendung von Spitzen und Kanten, die nach den bekannten Verfahren hergestellt werden, daß sich der Elektronenstrom mit der Betriebszeit verringert, da die Spitzen oder Kanten durch positive Ionen des unvermeidlichen Restgases im System zerstört werden. Das gleiche gilt für die Feldemissionskathoden, die durch Aufdampftechniken hergestellt werden. Dies ist vor allem dadurch bedingt, daß die Materialstruktur der Emissionsspitzen nicht eindeutig definiert ist. Hierdurch kann die Geometrie und Mikrostruktur der Spitze und damit die Austrittsarbeit der Elektronen in so großen Grenzen variieren, daß der Elektronenstrom mehrerer Spitzen, die in einem Prozeß hergestellt werden, um Zehnerpotenzen unterschiedlich ist und dieser sich zudem mit der Betriebsdauer ändert.

Außerdem können nach dem Stand der Technik die Feldemissionskathoden für die Vakuummikroelektronik nicht in der optimalen Geometrie hergestellt werden. Feldstärkerechnungen für unterschiedliche Geometrien der Spitzen zeigen, daß die günstigste Form einer Feldemissionskathode ein schlanker Stab ist (Utsumi, Vacuum Microelectronics: What's New and Exciting, IEEE Transactions on Electron Devices 38(1991) S. 2276-2283). Mit den heutigen Verfahren der Mikrostrukturtechnik lassen sich allenfalls kegelförmige Spitzen definiert herstellen.

Kohlenstoff-Nanoröhrchen wurden erstmals von Iijima (Nature, 354 (1991) S. 56) im Elektronenmikroskop beobachtet und können heute in größeren Mengen beispielsweise an der Kathode eines Lichtbogens erzeugt werden (Iijima, Materials Science and Engineering, B19 (1993) S. 172-180). In Gegenwart von Eisen oder Kobalt lassen sich einschalige Kohlenstoff-Nanoröhrchen erzeugen. Theoretische Berechnungen zeigen, daß je nach Helizität der hexagonalen Ringstruktur der Wände die Kohlenstoff-Nanoröhrchen elektrisch leitend oder halbleitend sind (Saito, Fujita, Dresselhaus, Dresselhaus, Materials Science and Engineering, B19 (1993) 185-191). Die Kohlenstoff-Nanoröhrchen lassen sich auch mit Metallen füllen, beispielsweise mit Blei. Weitere Verfahren zur Herstellung von Kohlenstoff-Nanoröhrchen sind in der Literatur beschrieben:
Kohlenstoff-Nanoröhrchen lassen sich durch katalytische Zersetzung von Acetylen über Eisen-Partikel bei etwa 700 °C herstellen (José-Yacaman, Miki.-Yoshida, Rendon, Applied Physics Letters 62(6)1993, S 657-659).
In Gegenwart von Methan, Argon und Eisendampf lassen sich einschalige Kohlenstoff-Nanoröhrchen in dem Ruß-Niederschlag an den Kammerwänden einer Lichtbogenapparatur finden (Iijima, Nature 363 (1993) S. 603-605).
Durch Verdampfen einer Kohlefolie im Hochvakuum lassen sich mehrschalige Kohlenstoff-Nanoröhrchen auf einer Graphitoberfläche abscheiden (Ge, Sattler, Science 260 (1993) S. 515-518).
Durch Verdampfen von hochreinem Graphit mit Elektronenstrahlen im Vakuum können Kohlenstoff-Nanoröhrchen auf Substraten aus verschiedenen Materialien hergestellt werden, wobei die Kohlenstoff-Nanoröhrchen in Richtung des Dampfstrahls ausgerichtet sind (Kosakovskaya u.a., JETP Lett., 56 (1992) 26).

Neben den Kohlenstoff-Nanoröhrchen scheiden sich auf dem Substrat im allgemeinen auch ungeordnete Kohlenstoffpartikel ab. Diese können beispielsweise durch Behandlung in oxidierender Atmosphäre bei erhöhter Temperatur von bis zu 500 °C, vorzugsweise 400 °C, entfernt werden. In gleicher Weise können die Kohlenstoff-Nanoröhrchen in oxidierender Atmosphäre (Luft, CO₂ oder reinem Sauerstoff) an den Abschlußkappen geöffnet werden. Dies bietet die Möglichkeit, die Kohlenstoff-Nanoröhrchen mit Metallen zu füllen, wie von Ajayan u. Iijima in Nature 361, S. 333 für die Füllung mit Blei beschrieben ist.

Grundsätzlich ist es möglich, diese nach einem der oben beschriebenen Verfahren hergestellten Kohlenstoff-Nanoröhrchen mit Hilfe von Mikromanipulatoren auf einer geeigneten Unterlage zu befestigen und so eine Feldemissionskathode herzustellen. Dieses Verfahren ist aber unpraktisch und insbesondere für Feldelektrodenarrays mit vielen Kathodenspitzen, wie in der Vakuummikroelektronik angestrebt wird, nicht geeignet.

Aus der US-A-5 138 220 sind Feldemissionskathoden mit Emissionsspitzen aus biomolekularen Mikrostrukturen oder einem Metall-Halbleiter-Eutektikum bekannt. Der Durchmesser dieser Strukturen liegt im Mikrometerbereich, und zur Umsetzung einer ausreichenden Emission ist eine anschließende Metallisierung erforderlich.

In der Veröffentlichung IBM Technical Disclosure Bulletin, BD. 35, Nr. 7, Dezember 1992, Seiten 410-411 ist die Verwendung von Buckminsterfulleren-Molekülen als Spitze von Raster-Sonden-Mikroskopen beschrieben. Neben kugelförmigen C₆₀-Molekülen werden auch Derivate von C₆₀- und Heterofullerene, also Käfigmoleküle, bei denen einzelne C-Atome durch Bor oder Stickstoff ersetzt sind, genannt.

### DARSTELLUNG DER ERFINDUNG

Der vorliegenden Erfindung liegt die Aufgabe beziehungsweise das technische Problem zugrunde, eine Feldemissionskathodeneinrichtung anzugeben, die die Nachteile des Standes der Technik vermeidet, eine hohe Emissionsqualität gewährleistet, eine erhöhte Betriebsdauer ermöglicht und insbesondere dem Beschuß der Ionen des Restgases standhält. Darüberhinaus liegt der vorliegenden Erfindung die Aufgabe beziehungsweise das technische Problem zugrunde, ein Verfahren zur Herstellung einer Feldemissionskathodeneinrichtung der eingangs genannten Art anzugeben, das eine technisch optimale Herstellung gewährleistet und wirtschaftlich einsetzbar ist.

Die erfindungsgemäße Feldemissionskathodeneinrichtung ist durch die Merkmale des unabhängigen Anspruchs 1 gegeben. Das erfindungsgemäße Verfahren zur Herstellung der Feldemissionskathodeneinrichtung ist durch die Merkmale des Anspruchs 9 gegeben. Vorteilhafte Ausgestaltungen und Weiterbildungen sind Gegenstand der abhängigen Ansprüche.

Die erfindungsgemäße Feldemissionskathodeneinrichtung zeichnet sich demgemäß dadurch aus, daß als Feldemissionskathoden Kohlenstoff-Nanoröhrchen verwendet werden. Kohlenstoff-Nanoröhrchen können einschalig mit einem Durchmesser von ca. 1 Nanometer und Längen von über 1 Mikrometer oder auch mehrschalig mit bis zu einigen Nanometern Durchmesser hergestellt werden. Es lassen sich auch Bündel von einschaligen Kohlenstoff-Nanoröhrchen mit Durchmessern von etwa 5 Nanometern herstellen. Die Wände der Kohlenstoff-Nanoröhrchen bestehen aus Kohlenstoffatomen in hexagonaler Anordnung, während die bevorzugt eingesetzten Abschlußkappen zusätzlich Fünfringstrukturen enthalten. Die einzelnen Kohlenstoffatome der Kohlenstoff-Nanoröhrchen sind chemisch stark gebunden, wodurch die Kohlenstoff-Nanoröhrchen eine extrem hohe mechanische Festigkeit aufweisen. Hieraus resultiert auch die hohe Sputterfestigkeit im Vergleich zu den regellos gewachsenen Spitzen, die nach dem Stand der Technik aufgedampft werden.

Die Verwendung der an sich bekannten Kohlenstoff-Nanoröhrchen als Feldemissionskathode verbindet also den Vorteil einer optimalen Geometrie mit der hohen Festigkeit, wodurch sichergestellt ist, daß die Emissionseigenschaften derartiger Feldemissionskathoden sich während des Betriebes nicht verändern im Gegensatz zu,den bisher verwendeten Kathodenspitzen.

Um die genannten Vorteile der Kohlenstoff-Nanoröhrchen auch für die Herstellung von Feldemissionskathodenarrays der Vakuummikroelektronik nutzbar zu machen, müssen die bekannten Verfahren zur Herstellung derartiger Anordnungen erfindungsgemäß so modifiziert werden, daß Kohlenstoff-Nanoröhrchen an entsprechend präparierten Stellen eines Substrats wachsen.

Das Herstellverfahren kann zur Herstellung sowohl einzelner Feldemissionskathoden als auch von Feldemissionskathodenarrays eingesetzt werden.

Weitere Ausführungsformen und Vorteile der Erfindung ergeben sich durch die in den Ansprüchen ferner aufgeführten Merkmale sowie durchdie nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: ein einzelnes Feldemissionselement eines Feldemitterarrays, wie es nach dem Stand der Technik hergestellt werden kann,
- Fig. 2: dasselbe Element nach dem ersten erfindungsgemäßen Verfahrensschritt, um die Emissionsspitze mit Kohlenstoff-Nanoröhrchen zu versehen,
- Fig. 3: dasselbe Element nach dem Aufdampfen von Kohlenstoff,
- Fig. 4: dasselbe Element nach dem letzten Verfahrensschritt im endgültigen Zustand,
- Fig. 5: einen Ausschnitt aus einem Feldemitterarray mit einzeln ansteuerbaren Emissionsspitzen,
- Fig. 6: den Querschnitt eines Graphitplättchens mit Schneidkante,
- Fig. 7: im Querschnitt einen vorbereiteten Block von zehn Graphitplättchen mit Spannvorrichtung zum Aufdampfen von Kohlenstoff-Nanoröhrchen und
- Fig. 8: eine Diode für die Leistungsimpulstechnik mit einer erfindungsgemäß präparierten Feldemissionskathode.

### WEGE ZUM AUSFÜHREN DER ERFINDUNG

Im folgenden wird an einem Beispiel erläutert, wie Feldemissionskathoden aus Kohlenstoff-Nanoröhrchen hergestellt werden können, die beispielsweise als Kathoden für Dioden oder Schalter dienen. In einem zweiten Beispiel wird erläutert, wie Feldemissionskathoden für ein Feldemitterarray mit Verfahren der Mikrostrukturtechnik hergestellt werden können.

### Beispiel: Herstellung von Einzelkathoden auf einer Schneide

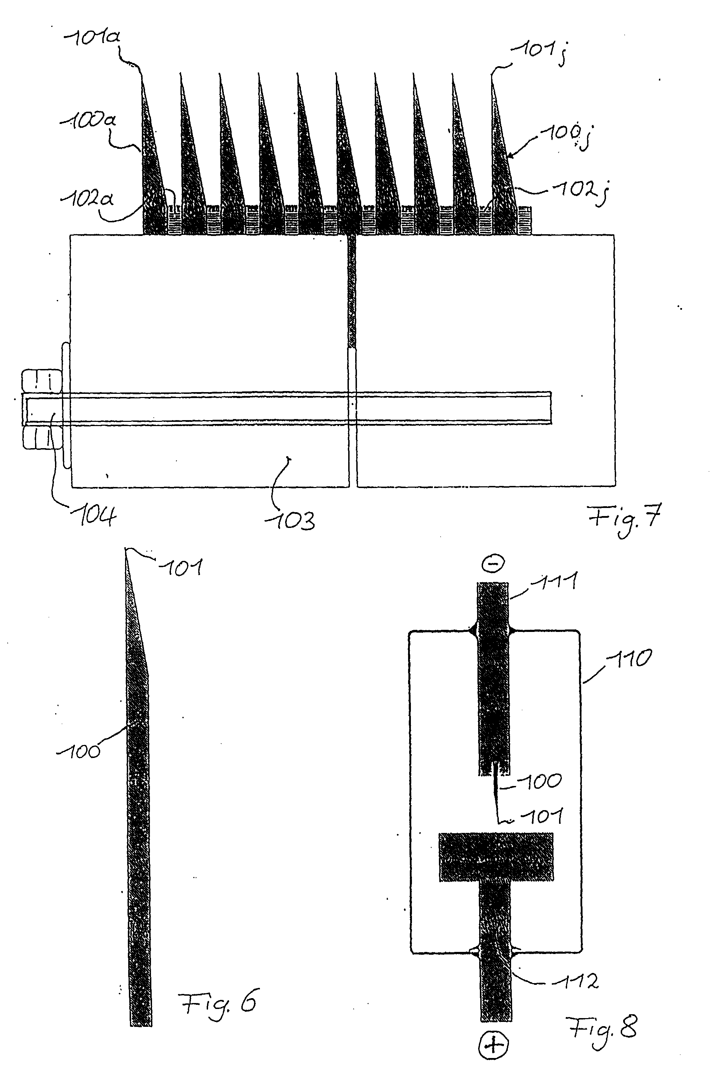

Quadratische Graphitplättchen von 1 cm (Zentimeter) Kantenlänge und einer Stärke von 1 mm (Millimeter) werden an einer Kante zu einer Schneide geschliffen oder geätzt. Fig. 6 zeigt ein derartiges Graphitplättchen 100 mit einer einseitig abgeschrägten Schneide 101. In Fig. 7 ist dargestellt, wie zehn dieser Graphitplättchen 100a bis 100j in einer Einspannvorrichtung 103 zu einem Block derart zusammengefaßt sind, daß die Schneiden 101a bis 101j auf einer Seite des Blocks in einer Ebene liegen und zwischen den Graphitplättchen jeweils als Abstandshalter 102a bis 102j eine Aluminiumfolie oder eine Teflonfolie liegt. Die Einspannvorrichtung besteht aus zwei Messingblöcken, in die Ausnehmungen zur Aufnahme der zehn Graphitplättchen mit den Abstandsfolien gefräst sind. Die Blöcke werden über zwei Schrauben 104 zusammengeschraubt.

Der vorbereitete Block wird in eine Vakuumapparatur eingebaut, in der ein Target aus hochreinem Graphit mit einem Elektronenstrahl verdampft wird. Dabei sind das Graphittarget und der Block so angeordnet, daß der Kohlenstoffdampf senkrecht auf die Ebene mit den Graphitschneiden auftrifft. Unter diesen Bedingungen wachsen auf den Schneidenkanten Kohlenstoff-Nanoröhrchen einzeln und in Bündeln von mehreren Röhrchen in Richtung des Kohlenstoffdampfstrahls. Nachdem eine Schichtstärke von einigen Zehntel Mikrometer erreicht ist, wird der Aufdampfvorgang beendet.

Die Schneidenkanten und die abgeschrägten Flächen der Graphitplättchen sind jetzt mit Kohlenstoff-Nanoröhrchen beschichtet, die eine außerordentlich hohe mechanische Festigkeit aufweisen. Die Mikrostruktur der Oberfläche ist durch röhrenförmige Erhebungen mit scharfen Spitzen, die einen Krümmungsradius von wenigen Nanometern haben, gekennzeichnet.

In Fig. 8 ist dargestellt, wie ein in dieser Art präpariertes Graphitplättchen in einer als Schaltelement dienende Diode eingesetzt werden kann. In einem evakuierten Glaskolben 110 sind eine großflächige Anode 112 und ein Kathodenstift 111 eingeschmolzen. Auf dem Kathodenstift ist das Graphitplättchen 100 mit der Schneidkante 101 so befestigt, daß es der Anode im Abstand von etwa 1 mm gegenübersteht. Bei Anlegen einer ausreichend hohen negativen Spannung an die Kathode kann ein elektrischer Strom durch die Diode fließen.

In gleicher Weise lassen sich statt einer einzelnen Schneidkante mehrere Schneidkanten als Kathode verwenden.

Diese Schneidkanten zeichnen sich dadurch aus, daß sie im GE-gensatz zu Schneidkanten ohne Kohlenstoff-Nanoröhrchen eine wesentlich größere Überhöhung des elektrischen Feldes aufweisen, was sich darin äußert, daß bei gleicher Spannung der Feldemissionsstrom größer ist. Darüberhinaus werden die Emissionsspitzen nicht durch Ionen des Restgases bereits nach kurzer Betriebszeit zerstört.

Ds geschilderte Herstellverfahren läßt sich problemlos auf eine größere Anzahl von Graphitplättchen mit längerer Schneidkante übertragen. Ebenso lassen sich der Kantenwinkel und der Abstand der Schneidkanten voneinander in weiten Grenzen variieren. Es ist somit eine Feldemissionskathode vorgestellt, deren elektronenemittierende Fläche und Stromdichte an viele Anwendungen beispielsweise in der Leistungsimpulstechnik anpaßbar ist.

### Beispiel: Herstellung von Feldemissionskathoden als Array

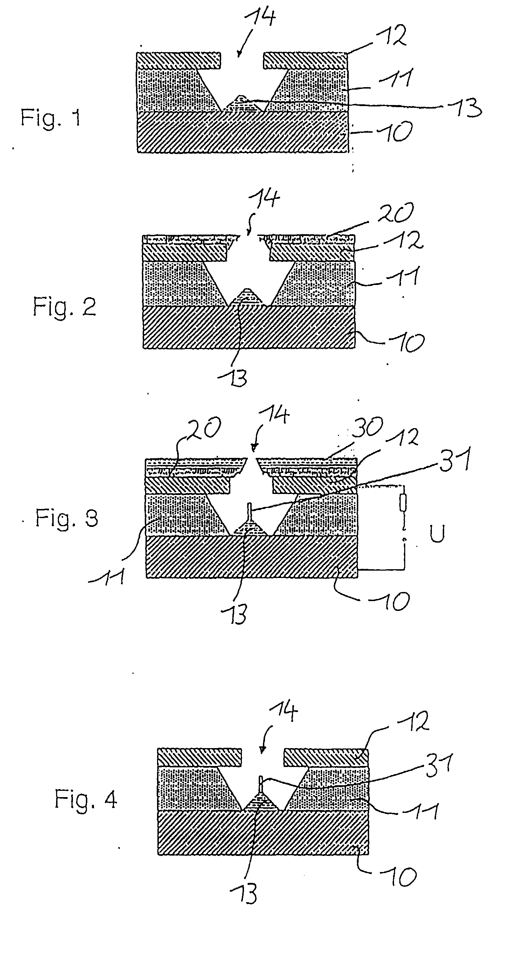

Zunächst wird nach einem vorbekannten Verfahren ein Array von Feldemitterkathoden und Gateelektroden aus Molybdän auf einem dotierten Siliziumsubstrat mit den Methoden der Siliziumprozeßtechnik hergestellt, wie es beispielsweise in dem Artikel Spindt et al., J. Appl. Physics 47 (1976), S. 5248ff beschrieben ist (siehe auch Busta a.a.O. und Iannazzo a.a.O). In Fig. 1 ist eine Feldemitterkathode mit Gateelektrode dargestellt. Mit 10 ist das elektrisch leitfähig, n-dotierte Siliziumsubstrat bezeichnet, 11 bezeichnet eine ca. 2 µm starke aufgedampfte Isolierschicht aus SiO2, 12 die ca.0,5 µm starke aufgedampfte Molybdän-Gate-Elektrode, 13 ist die spitzenförmige Feldemissionskathode aus Molybdän. Vorteilhaft werden die Gate-Öffnungen 14 der Molybdänschicht zwischen 0,4 und 0,8 µm gewählt; damit wird in dem zitierten Herstellverfahren erreicht, daß die Kathodenkegelspitzen etwa 0,5 µm unterhalb der Gateelektroden liegen.

In einem folgenden Prozeßschritt wird auf das Feldemitterarray, das in dieser Form bereits dem Stand der Technik entspricht, eine Opferschicht aus Aluminium aufgebracht, indem das Substrat senkrecht zur Ob erfläche in Rotation versetzt und unter streifendem Einfall mit Aluminium bedampft wird. Durch diese Art des Aufdampfens wird vermieden, daß das Aluminium sich inden Kathodenöffnungen niederschlägt. Die Fig. 2 zeigt ein Feldemitterelement nach diesem Prozeßschritt; die Aluminium-Opferschicht ist mit 20 bezeichnet.

In nächsten Prozeßschritt wird ein Graphittarget, das oberhalb des Feldemitterarrays angeordnet ist, durch einen Elektronenstrahl verdampft und der Kohlenstoff auf dem Feldemitterarray abgeschieden. Ein Teil des Kohlenstoffatomstrahls dringt durch die Gateöffnungen und schlägt sich auf den Kathodenspitzen nieder. Wie aus einer Veröffentlichung von Kosakovskaya u.a., JETP Lett., 56 (1992) 26 bekannt ist, bilden sich dabei röhrenförmige parallele Graphitfasern in Richtung des einfallenden Atomstrahls. Eine Verbesserung des Wachstumsprozesses wird erreicht, wenn während dieses Prozeßschrittes eine Spannung U_{G} von der Größenordnung 50 V zwischen Kathoden- und Gateschicht gelegt wird. Die mittlere Feldstärke liegt dann in der Größenordnung von 50 V/0,5 µm = 10⁸ V/m; durch die Überhöhung der Feldstärke an der Spitze steigt diese dort auf über ≈ 10⁹V/m an. Die hohe Feldstärke an der Faserspitze bewirkt offensichtlich, daß die Faserenden geöffnet bleiben und das Wachstum der Fasern verbessert wird (Smalley, a.a.O. S. 4). Die Fig. 3 zeigt ein Feldemitterelement nach diesem Prozeßschritt, wobei mit 30 die abgeschiedene Kohlenstoffschicht auf der Gateelektrode und mit 31 ein oder mehrere Kohlenstoff-Nanoröhrchen auf der Molybdänspitze bezeichnet sind. Schematisch ist auch die Spannungsquelle zur Erzeugung der Feldstärke an der Kathodenspitze dargestellt.

Über den Emissionsstrom Ic kann das Wachstum der Kohlenstoff-Nanoröhrchen kontrolliert werden. Je länger die aufgewachsenen Kohlenstoff-Nanoröhrchen sind, umso stärker wird der Emissionsstrom. Der Prozeß muß rechtzeitig abgebrochen werden, wenn die Kohlenstoff-Nanoröhrchen einige Zehntel µm Länge erreicht haben. Vorteilhaft wird hierbei die Gatespannung U_{G} leicht moduliert. Der Quotient dIc/dU_{G} wird als differentielle Steilheit bezeichnet und kann als Maß für die Qualitat des Feldemitterarrays dienen.

In einem letzten Schritt wird die Kohlenstoffschicht mit der Alumiumopferschicht weggeätzt, so daß das Feldemitterelement nach diesem Schritt wie in Fig. 4 dargestellt aussieht.

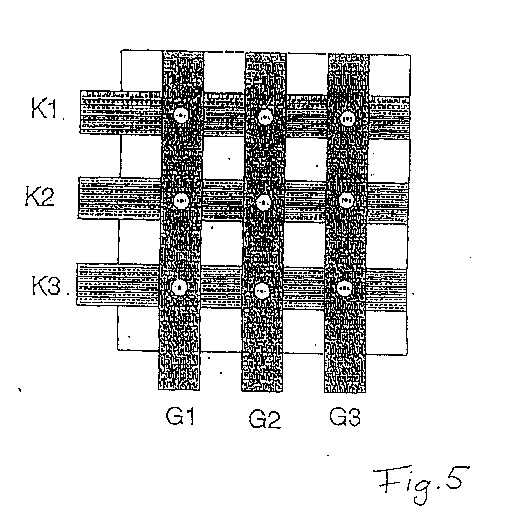

In Abwandlung des beschriebenen Herstellprozesses können die Kathoden statt in ihrer Gesamtheit elektrisch verbunden zu sein und auf gleichem Potential zu liegen auch so hergestellt werden, daß jeweils nur eine Reihe elektrisch miteinander gekoppelt ist. In gleicher Weise können die Gateelektroden derart hergestellt werden, daß sie ebenfalls nur in einer Reihe elektrisch gekoppelt sind, allerdings senkrecht zur Richtung der in Reihe geschalteten Kathoden. Hiermit ist die Möglichkeit gegeben, jede Kathode einzeln anzusteuern. Diese Art der Schaltung ist vorbekannt und beispielsweise für den Bildschirm mit digital ansteuerbaren Bildpunkten der Firma LETI verwendet (beschrieben in Busta a.a.O. S. 69-70) . Schematisch ist diese Schaltung für drei Kathodenreihen und drei Gatereihen in Fig. 5 in Draufsicht dargestellt.

Auf einem Substrat mit elektrisch nichtleitender Oberfläche 1 sind elektrisch leitfähige Kathodenbahnen K1, K2 und K3 beispielsweise aus n-dotiertem Silizium in einer Breite von wenigen Mikrometern aufgebracht. Die nachfolgende - nicht dargestellte - Isolierschicht aus Siliziumdioxid in einer Stärke von etwa 2 Mikrometer entspricht der von Spindt beschriebenen Anordnung. Die Gateelektroden G1, G2 und G3 werden ebenso wie die Kathoden streifenförmig, allerdings senkrecht zur Richtung der Kathodenbahnen, aufgebracht. Die weiteren Prozeßschritte entsprechen den Schritten, wie sie zur Herstellung der nicht einzeln ansteuerbaren Feldemitterkathoden angewendet werden.

Die mittlere Elektrode der letzten Spalte in Fig. 5 läßt sich nun beispielsweise so ansteuern, indem an den Kathodenstreifen K2 eine negative Spannung und an den Gatestreifen G3 eine positive Spannung gelegt wird; es fließt dann ein Feldemissionsstrom aus dieser Elektrode, der im Kathoden- oder Gatekreis gemessen werden oder mit einer - hier nicht gezeichneten - Sauganode nachgewiesen werden kann.

In dem hier beschriebenen Herstellverfahren kann diese Anordnung der Kathodenstreifen und Gatestreifen dazu verwendet werden, um den Herstellvorgang jeder einzelnen Kathode gezielt zu kontrollieren. Es ist dann möglich, den Emissionsstrom während des Herstellprozesses aus jeder Feldemitterspitze zu messen und nicht nur den Summenwert des gesamten Feldemitterarrays. Durch Wegschalten der Spannung an einer Feldemissionskathode wird die Bildung einer Abschlußkappe mit Fünfringstrukturen begünstigt, so daß kein weiteres Wachstum mehr erfolgt.

Vorteilhaft für die Bildung der Kohlenstoff-Nanoröhrchen ist es, wenn der Bildungsvorgang bei erhöhten Temperaturen von 100 bis 700 °C (Grad Celsius), vorzugsweise 300 - 400 °C, stattfindet.

Ebenfalls ist es vorteilhaft, wenn vor dem Aufsputtern des Kohlenstoffs eine wenige Atomlagen dicke Schicht von Eisen oder Kobalt auf die Molybdänkathodenspitzen aufgebracht wird. Offenbar wirkt Eisen und Kobalt katalytisch positiv auf die Bildung von Kohlenstoff-Nanoröhrchen.

In Abwandlung der zu vor beschriebenen Ausführungsart der Erfindung kann man auch auf den Vorteil der schlanken, zylindrischen Form der Kohlenstoff-Nanoröhrchen verzichten und nur den Vorteil der hohen mechanischen Stabilität von Käfigmolekülen, das heißt Widerstandsfähigkeit gegen den Beschuß der Kathode durch positive Restgasionen, ausnutzen. In diesem Fall werden die in herkömmlicher Weise - durch Aufdampfen im Vakuum mit den Verfahren der Mikrostrukturtechnik oder durch Ätzen - hergestellten Kathoden mit elektrisch leitfähigen Käfigmolekülen beschichtet. Die Käfigmoleküle können Fullerene, Heterofullerene oder deren Derivate sein, insbesondere auch endohedrale und exohedrale Verbindungen beispielsweise der Art M₃C₆₀ oder M₃C₇₀, wobei M ein Metall, vorzugsweise die Alkalimetalle Kalium oder Natrium, bedeutet. Die Käfigmoleküle können auch in kristalliner Form, beispielsweise c₆₀ in Form von Fullerit, auf die Kathode aufgebracht werden.

### ANWENDUNGEN

Die Feldemissionskathoden, deren Widerstandsfähigkeit und Emissionseigenschaften durch die Beschichtung mit Kohlenstoff-Nanoröhrchen oder auch mit Fullerenen und deren Derivaten in molekularer oder kristalliner Form verbessert worden sind, können überall dort eingesetzt werden, wo bisher thermionische Kathoden im Vakuum eingesetzt wurden, und in allen Anwendungen der Vakuummikroelektronik. Typische Anwendungsfelder werden im folgenden aufgeführt, wobei die Aufzählung nicht erschöpfend ist und der Fachmann die erfindungsgemäße Feldemissionskathode problemlos auf ähnliche Anwendungen übertragen kann.

Einzelemitterspitze, Emitterkanten oder Emitterarrays können als Elektronenquelle eingesetzt werden für Röntgenröhren, Röntgenröhren mit flächigen, ansteuerbaren Kathoden, beispielsweise für die Computertomographie, Elektronenstrahllithographie, Miniaturelektronenmikroskop, Leistungsschaltröhren, Diode oder Triode, Logikschaltelement, Bildschirm.

Feldemissionskathoden können in miniaturisierten elektronischen Bauteilen eingesetzt werden, wie Höchstfrequenzdioden, Höchstfrequenztrioden, Dioden und Trioden in Kombination mit Halbleiterbauelementen, temperaturfesten Dioden und Trioden in KFZ-Motoren, temperaturfesten Logik-Bauelementen, elektronischen Bauelementen mit Dioden- und Triodenfunktionen, die eine besondere Festigkeit gegenüber elektromagnetische Störstrahlung und ionisierende Strahlung aufweisen, Drucksensoren, bei denen der Abstand Kathode Gate durch den Druck beeinflußt wird, Mikrowellengeneratoren und -verstärker.

Als Array können Feldemissionskathoden bevorzugt eingesetzt werden als großflächige Elektronenquellen hoher Stromdichte, ansteuerbare Elektronenquellen für flache Bildschirme hoher Leuchtdichte in ein- oder mehrfarbiger Ausführung.

## Patentansprüche

1. Feldemissionskathodeneinrichtung (13) mit einer Feldemissionskathode aus einem elektrisch leitfähigen Material und mit einer schlanken stabförmigen Geometrie oder einer Schneidkante (101) zur Erzielung einer hohen Überhöhung der elektrischen Feldstärke, wobei der elektronenemittierende Teil der Feldemissionskathode (13) röhrenförmige Moleküle (31) aufweist, **dadurch gekennzeichnet**, daß die röhrenförmigen Moleküle zumindest bereichsweise als einschalige oder mehrschalige Kohlenstoff-Nanoröhrchen (31) ausgebildet sind.

2. Einrichtung nach Anspruch 1,
**dadurch gekennzeichnet**, daß die Kohlenstoff-Nanoröhrchen (31) Abschlußkappen aufweisen.

3. Einrichtung nach Anspruch 1 und/oder 2,
**dadurch gekennzeichnet**, daß die ein- und/oder mehrschaligen Kohlenstoff-Nanoröhrchen zu Bündeln zusammengefaßt sind.

4. Einrichtung nach einem oder mehreren der vorstehenden Ansprüche 1 bis 3,
**dadurch gekennzeichnet**, daß die Kohlenstoff-Nanoröhrchen (31) mit Metall gefüllt sind.

5. Einrichtung nach einem oder mehreren der vorstehenden Ansprüche 1 bis 4,
**dadurch gekennzeichnet**, daß die Kohlenstoff-Nanoröhrchen zumindest teilweise endohedrale oder exohedrale Verbindungen mit anderen Atomen oder Molekülen aufweisen.

6. Einrichtung nach einem oder mehreren der vorstehenden Ansprüche,
**dadurch gekennzeichnet**, daß die Feldemissionskathode die Spitze eines Feldelektronenmikroskops, eines Feldionenmikroskops, eines Rastertunnelmikroskops oder eines Rasterkraftmikroskops bildet.

7. Einrichtung nach einem oder mehreren der vorstehenden Ansprüche,
**dadurch gekennzeichnet**, daß eine Vielzahl gleichartiger Feldemissionskathoden in einer Linie oder einer Ebene angeordnet sind und dadurch eine lineare beziehungsweise flächige Elektronenquelle bilden.

8. Einrichtung nach einem oder mehreren der vorstehenden Ansprüche,
**dadurch gekennzeichnet**, daß eine Vielzahl gleichartiger Feldemissionskathoden, insbesondere 10.000 bis 1.000.000, in einer Ebene in Form einer Matrix angeordnet sind und die Feldemissionskathoden einzeln ansteuerbar sind und die Feldemissionskathoden die Elektronenquellen für die Bildpunkte eines optischen Anzeigesystems darstellen.

9. Verfahren zur Herstellung einer Feldemissionskathodeneinrichtung mit Kohlenstoff-Nanoröhrchen nach einem oder mehreren der Ansprüche 1 bis 8,
**dadurch gekennzeichnet**, daß Kohlenstoff-Nanoröhrchen aus der Gasphase aufwachsen.

10. Verfahren nach Anspruch 9,
**dadurch gekennzeichnet**, daß während der Herstellung der Kohlenstoff-Nanoröhrchen ein elektrisches Feld zwischen dem Fußpunkt des Kohlenstoff-Nanoröhrchens als Kathode und einer im Abstand angeordneten Anode liegt.

11. Verfahren nach Anspruch 9 und/oder 10,
**dadurch gekennzeichnet**, daß der Fußpunkt jedes Kohlenstoff-Nanoröhrchens die metallische Spitze einer konventionell hergestellten Feldemissionskathode ist.

12. Verfahren nach einem oder mehreren der vorstehenden Ansprüche,
**dadurch gekennzeichnet**, daß an den Fußpunkten der Kohlenstoff-Nanoröhrchen katalytisch wirkende Metalle wie Eisen oder Kobalt aufgebracht sind.

## Claims

1. A field emission cathode device (13) with a field emission cathode consisting of an electrically conducting material and with a narrow, rod-shaped geometry or a knife edge (101) to achieve high magnification of the electric field strength, such that the electron-emitting part of the field emission cathode (13) has cylindrical molecules (31), wherein the cylindrical molecules are formed at least in part as single-shell or multiple-shell carbon nano-cylinders (31).

2. The device of Claim 1, wherein the carbon nano-cylinders (31) have end caps.

3. The device of Claims 1 and/or 2, wherein the single- and/or multiple-shell carbon nano-cylinders are collected into bundles.

4. The device of one or more of the preceding Claims 1 to 3, wherein the carbon nano-cylinders (31) are filled with metal.

5. The device of one or more of the preceding Claims 1 to 4, wherein the carbon nano-cylinders at least partly have endohedral or exohedral compounds with other atoms or molecules.

6. The device of one or more of the preceding Claims, wherein the field emission cathode forms the tip ofa field electron microscope, a field ion microscope, a scanning tunnel microscope, or a scanning power microscope.

7. The device of one or more of the preceding Claims, wherein a plurality of similar field emission cathodes is disposed in a line or a plane, and thereby forms a linear or planar electron source.

8. The device of one or more of the preceding Claims, wherein a plurality of similar field emission cathodes, especially 10,000 to 1,000,000, is disposed in a plane in the form of a matrix, and the field emission cathodes can be driven individually, and the field emission cathodes represent the electron sources for the image points of a visual display system.

9. A method for producing a field emission cathode device with carbon nano-cylinders of one or more of Claims 1 to 8, wherein the carbon nano-cylinders are grown from the gas phase.

10. The method of Claim 9, wherein, during the production of the carbon nano-cylinders, an electric field is applied between the base of the carbon nano-cylinder as cathode and an anode disposed at a distance.

11. The process of Claim 9 and/or 10, wherein the base of each carbon nano-cylinder is the metallic tip of a conventionally produced field emission cathode.

12. The process of one or more of the preceding claims, wherein catalytic metals such as iron or cobalt are applied to the bases of the carbon nano-cylinders.

## Revendications

1. Dispositif à cathode à émission par effet de champ (13) comprenant une cathode à émission par effet de champ, composée d'un matériau électriquement conducteur et présentant une géométrie affinée en forme d'aiguille ou une arête coupante (101) pour obtenir une importante surélévation de l'intensité du champ électrique, la partie de la cathode à émission par effet de champ (13) émettant des électrons présentant des molécules tubulaires (31), caractérisé en ce que les molécules tubulaires sont conçues au moins par zones en tant que nano-tubes au carbone (31) à une nappe ou à plusieurs nappes.

2. Dispositif selon la revendication 1,
caractérisé en ce que les nano-tubes au carbone (31) présentent des capots de recouvrement.

3. Dispositif selon la revendication 1 et/ou 2,
caractérisé en ce que les nano-tubes au carbone à une nappe et/ou à plusieurs nappes sont groupés en faisceaux.

4. Dispositif selon une ou plusieurs des revendications 1 à 3 précédentes,
caractérisé en ce que les nano-tubes au carbone (31) sont remplis de métal.

5. Dispositif selon une ou plusieurs des revendications 1 à 4 précédentes,
caractérisé en ce que les nano-tubes au carbone présentent au moins en partie des composés endohédres ou exohèdres avec d'autres atomes ou molécules.

6. Dispositif selon une ou plusieurs des revendications précédentes,
caractérisé en ce que la cathode à émission de champ forme la pointe d'un microscope électronique à émission de champ, d'un microscope ionique à émission de champ, d'un microscope à effet tunnel ou d'un microscope à balayage.

7. Dispositif selon une ou plusieurs des revendications précédentes,
caractérisé en ce qu'un certain nombre de cathodes à émission par effet de champ du même type sont disposées selon une ligne ou un plan et forment de ce fait une source d'électrons linéaire ou en nappe selon le cas.

8. Dispositif selon une ou plusieurs des revendications précédentes,
caractérisé en ce que plusieurs cathodes à émission par effet de champ du même type, particulièrement 10 000 à 1 000 000, sont disposées dans un plan sous la forme d'une matrice, en ce que les cathodes à émission par effet de champ peuvent être activées séparément et en ce que les cathodes à émission par effet de champ représentent les sources d'électrons correspondant aux points d'image d'un système indicateur optique.

9. Procédé de fabrication d'un dispositif à cathode à émission par effet de champ avec nano-tubes au carbone selon une ou plusieurs des revendications 1 à 8,
caractérisé en ce que les nano-tubes au carbone sont issus de la phase gazeuse.

10. Procédé selon la revendication 9,
caractérisé en ce que, pendant la fabrication des nano-tubes au carbone, un champ électrique existe entre la base du nano-tube au carbone servant de cathode et une anode disposée en formant un écartement.

11. Procédé selon la revendication 9 et/ou 10,
caractérisé en ce que la base de chaque nano-tube au carbone est la pointe métallique d'une cathode à émission par effet de champ fabriquée de façon conventionnelle.

12. Procédé selon une ou plusieurs des revendications précédentes,
caractérisé en ce que sont appliqués sur les bases des nano-tubes au carbone des métaux comme le fer ou le cobalt agissant par action catalytique.
